# EUROPEAN PATENT SPECIFICATION

(11) **EP 2 863 183 B1**
(45) Date of publication and mention of the grant of the patent: **08.08.2018**
(21) Application number: 13189051.9
(22) Date of filing: 17.10.2013
(51) Int. Cl.: G01D 4/00

(54) **Correcting accumulated power in utility meters**
Korrektur von gesammelter Leistung in Stromzählern
Correction de l'énergie accumulée dans des compteurs de service

(43) Date of publication of application: 22.04.2015
(73) Proprietor: General Electric Company, Schenectady, NY 12345 (US)
(72) Inventor: Fahrenbruch, John Kirk, Somersworth, NH 03878-3108 (US)
(74) Representative: Fischer, Michael Maria

(56) References cited:
- WO-A1-01/01079
- WO-A2-03/017724
- WO-A2-03/025878
- US-A- 5 869 960
- US-A1- 2002 162 014
- US-A1- 2013 190 937

## Description

The invention relates generally to detection and correction, and more particularly to methods and systems for the detection and correction of accumulated power in utility meters.

Infrastructure, such as a smart grid, includes a variety of systems and components with sensors. In the smart grid example, systems may include power generation systems, power transmission systems, meters, digital communications systems, control systems, and their related components. Certain meters include a variety of sensors. Unfortunately, the meters may be susceptible to possibly registering incorrect power usage and generation.

WO 03/025878 relates to utility meters, and more particularly, utility meters having automated meter reading capability. An arrangement for use in a utility meter includes a non-volatile memory and an RF transceiver. The non-volatile memory has a first and a second port, the first port configured to obtain commodity consumption data. The radio frequency RF transceiver is configured to receive an RF signal from an external source and to obtain energy from the RF signal and provide the energy to a bias voltage input of the non-volatile memory. The RF transceiver is further operable to perform a data transfer operation responsive to the received RF signal, the data transfer operation including a transfer of meter-related data between the non-volatile memory and the RF transceiver using the second port of the non-volatile memory.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In one embodiment, a system includes a utility meter. The utility meter includes a first sensor configured to detect a usage, a generation, or a combination thereof of electric power, and a power detection and correction system configured to detect and correct an inaccuracy with a measurement of an electrical voltage, electrical current, or a combination thereof from the first sensor. The power detection and correction system includes a processor configured to execute a program stored in a memory of the utility meter.

In a second embodiment, a system includes a tangible machine readable medium including power detection and correction instructions configured to measure an electrical voltage, measure an electrical current, and calculate a power using the measured electrical voltage and the measured electrical current over a time interval. The power detection and correction instructions are configured to determine if the calculated power is delivered over the time interval and add the calculated power to a total accumulation of electrical power received by a utility meter if the calculated power is delivered over the time interval. The power detection and correction instructions are configured to determine if the calculated power is received over the time interval and subtract the calculated power from the total accumulation of electrical power received by the utility meter if the calculated power is received over the time interval.

In a third embodiment, a method includes detecting an inaccuracy related to a measurement of an electrical voltage, electrical current, or a combination thereof from a sensor of a utility meter. The sensor is configured to provide an indication of an electrical power usage used by an end user, an electrical power generation generated by an end user, or a combination thereof.

These and other features, aspects, and advantages of the present invention will become better understood when the following detailed description is read with reference to the accompanying drawings in which like characters represent like parts throughout the drawings, wherein:
FIG. 1 is a block diagram of an embodiment of an intelligent generation, transmission, and distribution infrastructure (e.g., a smart grid infrastructure) system;
FIG. 2 is a schematic diagram of an embodiment of a power detection and correction meter system included in the system of FIG. 1;
FIG. 3 is a diagram of a voltage, a current, and a power output of the a power detection and correction meter system of FIG. 2, in accordance with an embodiment;
FIG. 4 is a diagram of a voltage, a current, a shift in the zero crossing between the voltage and current, and a power output of the a power detection and correction meter system of FIG. 2, in accordance with an embodiment; and
FIG. 5 is a flowchart of an embodiment of a process suitable for detecting and correcting the accumulation of power in the power detection and correction meter system of FIG. 2.

One or more specific embodiments of the invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the invention, the articles "a," "an," "the," and "said" are intended to mean that there are one or more of the elements. The terms "comprising," "including," and "having" are intended to be inclusive and mean that there may be additional elements other than the listed elements.

Certain infrastructure, such as an electric smart grid, may include a variety of interconnected systems and components. For example, the smart grid may include power generation systems, power transmission and distribution systems, metering systems, digital communications systems, control systems, and their related components. Smart meters incorporate many functionalities relating to the consumption of utilities, such as water, electricity, gas, and so forth. For example, smart meters may enable a utility provider, such as an electricity provider, to remotely monitor consumer use of the utility. Smart meters may also include a number of sensors to detect and measure the amount of power a consumer uses or generates. However, should an alternating current (AC) signal be offset by a direct current (DC) component of the AC signal, a shift or deformation of the consumed and/or generated power may become apparent due to a physical response of the sensor. This may result in inaccurate accumulation of power usage or power generation. For example, a consumer may not be billed by the utility for the correct total amount of power used, or likewise, the consumer may not be credited by the utility for the correct total amount of power generated.

Present embodiments include the detection and correction of the accumulation of power measured and registered by smart meters. By detecting, recording, and computing the absolute value of power either delivered or received from a consumer or other load over given time intervals, and summing the total accumulation of power, the systems and methods described herein may ensure that the smart meter may compute and measure power either used or generated over a time interval as a positive value, thus yielding the correct accumulation of power delivered or received from a consumer or other load. As will be further appreciated, the techniques described herein may be retrofitted to existing smart meters without adding (or removing) hardware components.

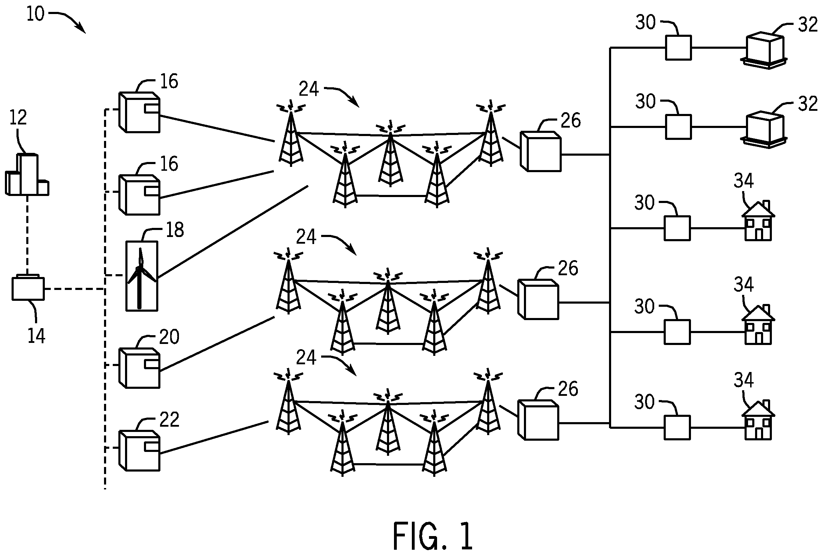

With the foregoing in mind, it may be useful to describe an embodiment of an infrastructure, such as an example smart grid system 10 illustrated in FIG. 1. As depicted, the smart grid system 10 may include one or more utilities 12. The utility 12 may provide for oversight operations of the smart grid system 10. For example, utility control centers 14 may monitor and direct power produced by one or more power generation stations 16 and alternative power generation stations 18. The power generation stations 16 may include conventional power generation stations, such as power generation stations using gas, coal, biomass, and other carbonaceous products for fuel. The alternative power generation stations 18 may include power generation stations using solar power, wind power, hydroelectric power, geothermal power, and other alternative sources of power (e.g., renewable energy) to produce electricity. Other infrastructure components may include a water power producing plant 20 and geothermal power producing plant 22. For example, water power producing plants 20 may provide for hydroelectric power generation, and geothermal power producing plants 22 may provide for geothermal power generation.

The power generated by the power generation stations 16, 18, 20, and 22 may be transmitted through a power transmission grid 24. The power transmission grid 24 may cover a broad geographic region or regions, such as one or more municipalities, states, or countries. The transmission grid 24 may also be a single phase alternating current (AC) system, but most generally may be a three-phase AC current system. As depicted, the power transmission grid 24 may include a series of towers to support a series of overhead electrical conductors in various configurations. For example, extreme high voltage (EHV) conductors may be arranged in a three conductor bundle, having a conductor for each of three phases. The power transmission grid 24 may support nominal system voltages in the ranges of 110 kilovolts (kV) to 765 kilovolts (kV). In the depicted embodiment, the power transmission grid 24 may be electrically coupled to power distribution substation 26. The power distribution substation 26 may include transformers to transform the voltage of the incoming power from a transmission voltage (e.g., 765 kV, 500kV, 345kV, or 138kV) to primary (e.g., 13.8kV or 4160V) and secondary (e.g., 480V, 230V, or 120V) distribution voltages. For example, industrial electric power consumers (e.g., production plants) may use a primary distribution voltage of 13.8kV, while power delivered to commercial and residential consumers may be in the secondary distribution voltage range of 120V to 480V.

As again depicted in FIG. 1, the power transmission grid 24 and power distribution substation 26 may be part of the smart grid system 10. Accordingly, the power transmission grid 24 and power distribution substation 26 may include various digital and automated technologies to control power electronic equipment such as generators, switches, circuit breakers, reclosers, and so forth. The power transmission grid 24 and power distribution substation 26 may also include various communications, monitoring, and recording devices such as, for example, programmable logic controllers (PLC) and electric fault detecting protective relays. For example, during storms, a protective relay at power distribution substation 26 may detect an electrical fault downstream of the substation, and operate a circuit breaker to allow the fault to clear and restore electric power. In certain embodiments, the power transmission grid 24 and power distribution substation 26 may also communicate data such as changes in electric load demand to a power correction and detection metering system 30.

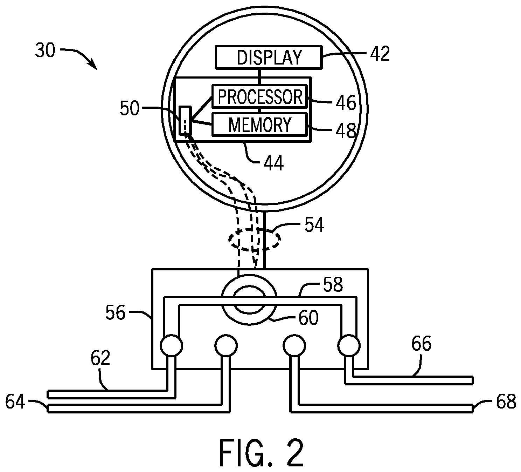

The power correction and detection metering system 30 may be an advanced metering infrastructure (AMI) meter used to measure, collect, and analyze electricity, water, and/or gas usage. The metering system 30 may be communicatively coupled to one or more of the components of the smart grid 10, including the power transmission grids 24 and power distribution substation 26. Additionally, the metering system 30 may enable two-way communication between commercial sites 32, residences 34, and the utility control center 14, providing for a link between consumer behavior and utility consumption (e.g., electric, water, and/or gas consumption). For example, metering system 30 may track and account for pre-paid electricity, water and/or gas in a similar fashion to pre-paid cell phone usage. Likewise, the utility's consumers 32 and 34 may benefit from lower utility charges by optimizing their utility use, for example, to take advantage of lower rates during low demand hours. Washer/dryers, electric car chargers, and other flexible power consumption appliances may be programmed to operate during low demand hours, resulting in lower utility bills and a more balanced utilization of energy. In certain embodiments, the metering system 30 may include a system of electrical and electronic components such as, for example, a display, processors, memory devices, sensors, bus bars, electrical conducting wires, and batteries. It should also be appreciated that the metering system 30 may measure, monitor, store, and display an apparent power (kVA), real power (i.e., the total power consumed by the resistive component of a given load over a time interval) (kW), and reactive power (i.e., the power consumed by the reactive component of a given load over a time interval) (kVar) as a product of power and time. For example, electric utilities may report to consumers their usage per kilowatt-hour (kWh) for billing purposes. The metering system 30 may also be powered, for example, via a 120VAC source or battery supply. The metering system 30 may include certain systems, as described in more detail with respect to FIG. 2, suitable for detecting and correcting the inaccurate registered accumulation of power registered by the metering system 30. For example, a negative power may be more easily detected and corrected.

Turning now to FIG. 2, the figure is a schematic diagram of an embodiment of a power detection metering system 30. The metering system 30 may be included in the metering system 30, which may additionally include monitoring and communications functionalities, as previously discussed. The metering system 30 may be a single-phase or poly-phase system. As also depicted, the metering system 30 may include a display 42 communicatively coupled to an electronic board 44 to display electricity consumption and generation in recorded time intervals or real-time. For example, the display 42 may be a liquid crystal display (LCD) to display parameters such as real power in watt-hours or kilowatt-hours (e.g., Wh or kWh), reactive power in var-hours or kilovar-hours (e.g., Varh or kVarh), current in amperes (A), voltage in volts (V), or some combination thereof. The display 42 may also display power (e.g., apparent, real, and reactive) delivered to the consumer 32, 34, from the utility 12, as well as power generated by the consumer 32, 34, to deliver to the grid 24, 26. For example, the consumer 32, 34 may interconnect a distributed generation (DG) resource (e.g., solar panels or wind turbines) to generate and deliver power to the distribution substation and grid 26.

In certain embodiments, the electronic board 44 may further include a processor 46 and/or other data processing and sensing circuitry that may be operatively coupled to a memory 48 to execute instructions for carrying out the presently disclosed techniques. These instructions may be encoded in programs or code stored in tangible non-transitory computer-readable medium, such as the memory 48 and/or other storage. The processor 46 may be a general purpose processor, system-on-chip (SoC) device, or some other processor configuration. The electronic board 44 may, in addition, include metrology circuitry, analog front end (AFE) circuitry, voltage reference circuitry, real-time clocks, data converters, and similar electronic circuitry and architectures. In an embodiment, the processor 46 and the memory 48 of the electronic board 44 may process, record, and store data received from a current sensor 60 of a bus bar 58 and source-side and load-side live and neutral conductors 62, 64, 66, and 68. For example, the processor 46 and the memory 48 of the electronic board 44 may, in time intervals or in real-time, sample single or poly-phase current (A), voltage (V), compute or process apparent power (e.g., VA or kVA), real power (e.g., W or kW), reactive power (e.g., Var or kVar), and power factor data, and report that data to the consumer or the utility. The processor 46 and memory 48 of the electronic board 44 may also support a number of embedded software and firmware applications and systems. For example, in certain embodiments, the processor 46 and memory 48 may support metrology, emulator, and sensing scheme applications and systems. The metrology circuitry and applications supported by the electronic board 44 may include code or instructions stored in a non-transitory machine-readable medium (e.g., memory 48) and used to read and analyze analog or digital current or voltage inputs, and determine if metering system 30 may have measured an accurate accumulation of power used or generated. In one embodiment, the instructions may be flash upgraded (e.g., transmitted via Ethernet cable, near field communication (NFC), and similar wired and/or wireless communication methods) to the electronic board 44, such that no additional hardware components is required by the metering system 30.

Furthermore, the electronic board 44 of the metering system 30 may also include a sensor input header 50 communicatively coupled to the processor 46 and the memory 48. In certain embodiments, the metering system 30 may also include one or more of the current sensor 60. The current sensor 60 may be electrically and/or communicatively coupled to the bus bar 58, and each of the current sensor 60 and the bus bar 58 may be housed inside a base 56. The bus bar 58 may be a bar or strip of conducting material (e.g., copper, aluminum, or other metals and metal alloys) for connecting the distribution substation 26 to an end user via the metering system 30.

In certain embodiments, the current sensor 60 may be any device that outputs a signal (e.g., AC/DC voltage or current) proportional to a detected electrical current flowing through the electrically and/or communicatively coupled bus bar 58. For example, the metering system 30 may be a 120VAC residential power meter. The current sensor 60 may, for example, continuously monitor the current flowing through the bus bar 58 to detect events such as power outages, electrical faults, decreases in current due to load changes, and so forth. The current sensor 60 may then output a signal proportional to the current detected flowing through the bus bar 58 to the electronic board 44, where a determination may be made to communicate the current data to the consumer 32, 34 or the utility 12. The current sensor 60 may include a primary and secondary winding, and may produce in the secondary winding a current or voltage that is proportional to a load or line current flowing through the primary winding. Accordingly, in one embodiment, the current sensor 60 may be a current transformer (CT). In such an embodiment, the current sensor 60 may include a magnetic core, in which the primary winding of the current sensor 60 may be electrically and/or communicatively coupled to the source-side live and neutral conductors 62 and 64 and bus bar 58, and the secondary winding may be electrically and/or communicatively coupled to the electronic board 44 via electrical leads 54 and sensor input header 50. For example, the current sensor 60 may measure a load current in the range of a few amps (A) to a few kiloamps (kA) on the primary winding, and may produce on the secondary winding a current in the range of a few milliamps (mA) to few hundred milliamps (mA) for sensing and processing. In another embodiment, the current sensor 60 may include a burden resistor or other resistive component (e.g., shunt resistor), which may be used to measure an output voltage on the secondary side of current sensor 60.

As noted above, the current sensor 60 may also include the electrical leads 54, which may couple electrically at a first end to current sensor 60, and couple electrically at an opposing end to sensor input header 50. The electrical leads 54 may include power electrical leads, a neutral or ground electrical lead, data transmit and receive electrical leads, or any combination thereof. In some embodiments, the electrical leads 54 may be color-coded corresponding to the function of the lead. For example, the colors red and black may respectively correspond to power and neutral leads, while the colors white, blue, or green, for example, may correspond to data-carrying leads. The leads 54 may also further enable the current sensor 60 to output a signal (e.g., DC voltage) to the electronic board 44 that is proportional to the measured AC current of bus bar 58.

As previously discussed, the metering system 30 may also include the sensor input header 50. In certain embodiments, the sensor input header 50 may couple electrically and/or communicatively at one end to the current sensor 60 via electrical leads 54, and couple electrically and/or communicatively at the opposing end to the electronic board 44. The input header 50 may include analog inputs, discrete inputs, digital inputs, or some combination thereof. In certain embodiments, the sensor input header 50 may be configured as part of a power accumulation detection and correction mechanism of the metering system 30.

In certain embodiments, the processor 46 within the metering system 30 may perform a series of calculations to determine the amount of power measured by the metering system 30. For example, the processor 46 may sample, process, and store in the memory 48 the nominal voltage (e.g., 120VAC) of bus bar 58, and may multiply the nominal voltage by the sampled value of the detected AC current of the bus bar 58 to determine a value for power. Further, the processor 46 may compute and measure, for example, single-phase or three-phase instantaneous (e.g., time-varying) or average (e.g., root-mean-square [RMS]) voltage, current, real, reactive and apparent power, power factor angle (e.g., the angle between the voltage and current), and so forth. As previously noted, a power (e.g., real or reactive) may be calculated at least by multiplying the nominal line or load voltage (e.g., V or kV) by a line or load current (e.g., A or kA) detected by current sensor 60 to produce a power (e.g., W, kW, Var and kVar).

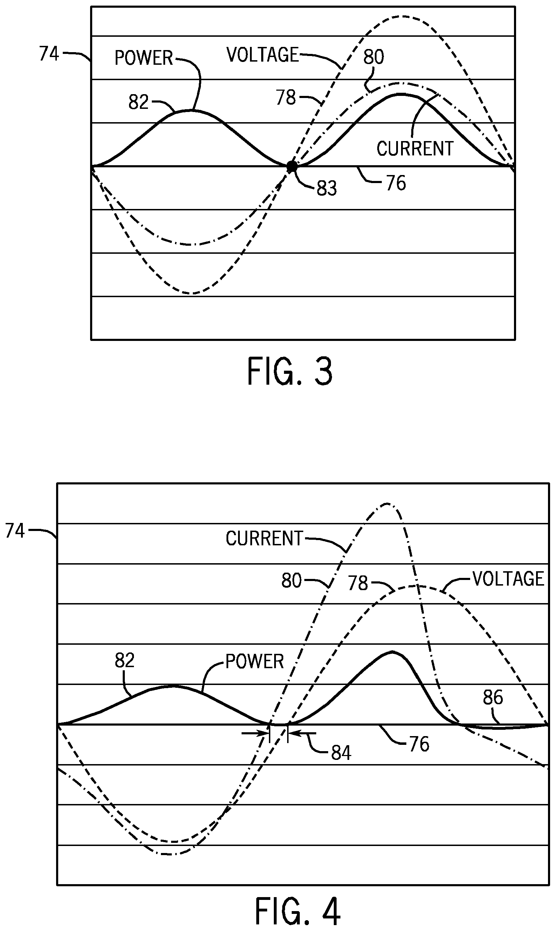

In certain embodiments, the voltage and current measured or sampled by the processor 46 of the metering system 30 may be displayed or analyzed as a waveform plot. As depicted ion FIG. 3, the waveform plot may include a magnitude range 74 of positive and negative values and a zero magnitude axis or time range 76 of both positive and negative values. Specifically, the waveform plot may include a voltage output 78 (e.g., voltage), a current output 80 (e.g., current), and a power 82 (e.g., power), as depicted in FIG. 3. The voltage output 78 measured by the metering system 30 may be a constant AC voltage. For example, as previously noted, the metering system 30 may be a residential or commercial power meter, in which case the voltage output 78 may be a constant 120VAC or 230VAC, respectively. Similarly, the current output 80 may be an AC current. However, the current output 80 may or may not be constant, as the current output 80 may depend on the connected load demand such as, for example, the commercial sites 32 or the residences 34. As will be discussed in further detail below, in certain embodiments, the current output 80 may be an asymmetrical current, in which the current output 80 may include an instantaneous AC current (i.e., a symmetrical or steady-state sinusoidal current) component and a DC offset (i.e., an exponentially decaying current) component.

The power 82 (e.g., power) is the product of the voltage output 78 and the current output 80. For example, the power 82 may be a real power value (e.g., Wh or kWh) delivered to a load such as commercial sites 32 or the residences 34. Accordingly, the power 82 may, in most instances, represent a plot of positive values specifically when the voltage output 78 (e.g., voltage) and current output 80 (e.g., current) are theoretically in phase with one another and cross a zero crossing 83 at substantially the same time. However, as will be appreciated, in some embodiments, influence of DC current may advance and begin to distort the current output 80, resulting in a negative power 82 (e.g., the product of the voltage output 78 and the current output 80) as illustrated in FIG. 4 with respect to a point 86 of the power 82. In such a case, the metering system 30 may measure an inaccurate and inexact accumulation of power, leading to incorrect billing for consumer power usage or incorrect crediting of consumer power generation by the utility. Accordingly, it should be appreciated that the waveform plot of FIG. 3 represents a theoretical depiction of the voltage output 78 (e.g., voltage), current output 80 (e.g., current), and power as the product of voltage and current 82 (e.g., power).

More typically, the current output 80 (e.g., current) may be an asymmetrical current, which may be composed of a symmetrical instantaneous current component and DC offset current component. As depicted in FIG. 4, the influence of the DC offset current component of the current output 80 may contribute to a shift 84 in the zero crossing (e.g., zero crossing 83 of FIG. 3) between the voltage output 78 and the current output 80. The shift 84 may further cause the power 82, or the product of the voltage output 78 and the current output 80, to constitute negative values. More particularly, the DC influence on the current output 80 may contribute to a distortion of the current output 80, and thus causes the processor 46 to compute negative values of the power 82. For example, as illustrated with respect to point 86 of the power 82 (e.g., power), the power 82 drifts into the negative range of the magnitude range 74. Without power accumulation correction, the processor 46 of the metering system 30, if sampling and summing the voltage output 78 and the current output 80, may compute or sum positive values of the power 82 until point 86, where the processor 46 may then sum inaccurate (e.g., negative) values of the power output 82. Again, without power accumulation correction, this would enable the consumer to consume at least some power at presumably no cost, or in the case that the consumer may generate power, go uncompensated for power generated and transported to, for example, the power grid 24, 26.

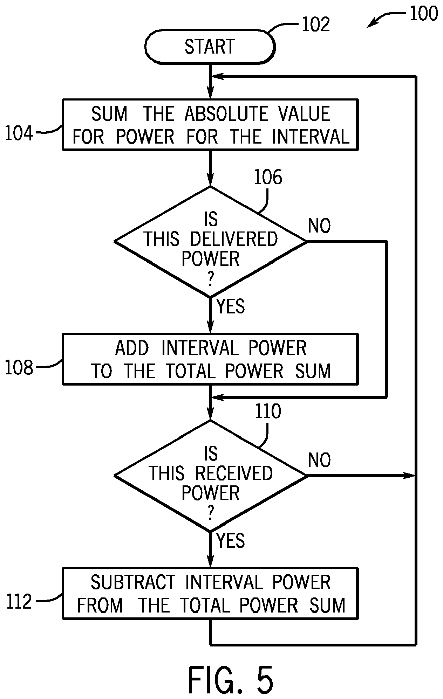

Turning now to FIG. 5, a flow diagram is presented, illustrating an embodiment of a process 100 useful in detecting and correcting the power 82 of the metering system 30 depicted in FIG. 2. For the purpose of illustration, the process 100 may be discussed with respect to FIG. 4 and FIG. 5. The process 100 may include code or instructions stored in a non-transitory machine-readable medium (e.g., the memory 48) and executed, for example, by the processor 46. The processor 46 of metering system 30 may continuously or periodically perform the process 100 presented in FIG. 5 to constantly monitor and correct the accumulated power registered by metering system 30. For example, the processor 46 of the metering system 30 may periodically perform the process 100 during normal operating conditions (e.g., power service consumed or generated as authorized), but may continuously or periodically also perform the process 100 during times of restricted power usage due to the utility 12 or the consumer 32, 34. It should also be appreciated that the code and/or instructions may be flash upgraded to the memory 48, and executed by the processor 46, such that no additional hardware components is required by the metering system 30 to perform the presently disclosed techniques.

The process 100 may begin (block 102 of FIG. 5) with the processor 46 of the metering system 30 summing (block 104 of FIG. 5) the absolute value of the product of the nominal voltage (e.g., voltage output 78 of FIG. 4) and the current (e.g., current output 80 of FIG. 4) detected by current sensor 60 to compute a real power in watt-hours (Wh) or in kilowatt-hours (kWh) and reactive power in var-hours (Varh) or in kilovar-hours (kVarh) over, for example, an approximately 1, 2, 5, 10, 15, 30, 45, 60, 120, 230 minute duration or time interval. For example, as previously discussed, the electric utility may program the metering system 30 to record and store the power consumed at a residential, commercial, industrial, or other facility over a 60-minute duration of time for appropriate billing purposes. Nevertheless, it should be noted that the metering system 30 may be configured to measure a real power and a reactive power over any time interval. As also previously noted, the processor 46 of the metering system 30 may perform a series of calculations to determine the amount of measured power over a time interval, and to sum the absolute value of the measured power to a total accumulated power, which may be stored, for, example, in the memory 48 of the metering system 30.

In certain embodiments, the processor 46 of the metering system 30 may compute and sum (block 104 of FIG. 5) the absolute value of the measured power (e.g., power 82 of FIG. 4) by implementing signed magnitude techniques. For example, the processor 46 may encode positive and negative values of the sampled power 82 by assigning the leftmost (e.g., most significant bit [MSB]) bit of the sampled power value to be a sign (e.g., positive or negative) bit. That is, if the leftmost bit or MSB is 0, for example, then the measured and sampled value of power 82 may be positive. Likewise, if the leftmost bit or MSB is 1, for example, then the measured and sampled value of power 82 may be negative. The remaining bits may represent the magnitude of the sampled power 82 value. Accordingly, to ensure the summation of only the absolute value of the sampled values of the power 82 of FIG. 4, the processor 46 may convert any negative sampled values (e.g., values having a 1 as the MSB) to positive values (e.g., values having a 0 as the MSB). It should also be appreciated that the processor 46 may also implement one's and two's complementation, binary coded decimal, among other techniques to represent positive and negative values of the sampled power output 82.

The processor 46 may determine (decision 106 of FIG. 5) whether or not the sampled power may be delivered power (e.g., power delivered to be consumed by consumers 32, 34) over some time interval (e.g., 60-minutes). If the sampled power is indeed delivered power, then the processor 46 may add the sampled power for the given time interval to the total accumulated power (block 108 of FIG. 5), thus recording and reporting (e.g., to the utility control center 14and/or the consumers 32 and 34) an accurate and correct measurement of accumulated power to, for example, the utility or the consumer. On the other hand that the sampled power may not be delivered power, the processor 46 may determine (decision 110 of FIG. 5) whether or not the sampled power is received power (e.g., power generated by consumers 32, 34 to be transported to the power distribution grid 26). Accordingly, if the sampled power is received, then the processor 46 may subtract (block 112 of FIG. 5) the sampled power over the given time interval from the total accumulated power and again report an accurate and correct measurement of accumulated power to, for example, the utility (e.g., utility control center 14) or the consumer (e.g., consumers 32 and 34). As discussed above, the process 100 may then be repeated over a number of time intervals.

Technical effects of the invention include the detection and correction of the accumulation of power measured and registered by smart meters. By detecting, recording, and computing the absolute value of power either delivered or received from a consumer or other load over given time intervals, and summing the total accumulation of power, the systems and methods described herein may ensure that the smart meter may compute and measure power either used or generated over a time interval as a positive value, thus yielding the correct accumulation of power delivered or received from a consumer or other load.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (30) comprising:
a utility meter, comprising
a first sensor (60) configured to detect a usage, a generation, or a combination thereof of electric power (82); and
a power detection and correction system (44) configured to detect and correct an inaccuracy with a measurement of an electrical voltage, electrical current, or a combination thereof from the first sensor (60), wherein the power detection and correction system (44) comprises a processor (46) configured to execute a program stored in a memory (48) of the utility meter;
wherein the processor (46) is configured to execute the following steps:
summing the absolute value for power for a first interval;
determining using the first sensor (60) at least one of an indication of an electric power usage used by an end user and an indication of an electric power generated by an end user;
the processor (46) further being configured to carry out one or more of the steps of:
determining if absolute value for power is delivered over the time interval and add the electric power usage to the absolute value for power received by the utility meter if the absolute value for power is delivered over the time interval; and
determining if the absolute value for power is received over the time interval and subtract electric power generated from the absolute value for power received by the utility meter if the absolute value for power is received over the time interval.

2. The system of claim 1, wherein the inaccuracy comprises at least one of:
a measurement of a DC offset component of the electrical current, and
a calculation of a negative electric power value.

3. The system of claim 1 or claim 2, wherein the first sensor (60) comprises a current transformer.

4. The system of any preceding claim, wherein the power detection and correction system comprises an electronic board (44) comprising the processor (46) and the memory (48), wherein the memory (48) is configured to be flash upgraded with instructions to detect and correct the inaccuracy.

5. The system of any preceding claim, wherein the power detection and correction system (44) is configured to accumulate the usage, the generation, or the combination thereof of the electric power over a time interval using a measurement of the electrical voltage and the electrical current, wherein, preferably, the power detection and correction system (44) is configured to compute the absolute value of the accumulation of the electrical power.

6. The system of any preceding claim, comprising a second sensor configured to detect the usage, the generation, or the combination thereof of the electric power, wherein the first sensor (60) is configured to detect a first electrical current in a first phase, and the second sensor is configured to detect a second electrical current in a second phase different from the first phase, and wherein the power detection and correction system (44) is configured to detect and correct an inaccuracy with a measurement of the first electrical current in the first phase and a meausrement of the second electrical current in the second phase.

7. The system of any preceding claim, wherein the utility meter comprises an advanced meter infrastructure (AMI) smart meter.

8. A method comprising:
detecting an inaccuracy related to a measurement of an electrical voltage, electrical current, or a combination thereof, generated by a sensor (60) of a utility meter, wherein the sensor is configured to provide an indication of an electrical power usage used by an end user, an electrical power generation generated by an end user, or a combination thereof;
correcting the inaccuracy by generating an electrical power usage or electrical power generation value;
the method comprising the steps of:
summing an absolute value for power for a first interval;
determining using a first sensor (60) at least one of an indication of the electric power usage used by an end user and an indication of an electric power generated by an end user;
determining if absolute value for power is delivered over the time interval and add the electric power usage to the absolute value for power power received by the utility meter if the the absolute value for power is delivered over the time interval; and
determine if the absolute value for power is received over the time interval and subtract electric power generated from the absolute value for power received by the utility meter if the the absolute value for power is received over the time interval.

9. A tangible machine readable medium comprising power detection and correction instructions configured to:
measure an electrical voltage;
measure an electrical current;
calculate a power using the measured electrical voltage and the measured electrical current over a time interval;
summing an absolute value for power for a first interval from the calculated power;
determining using a first sensor (60) at least one of an indication of the electric power usage used by an end user and an indication of an electric power generated by an end user;
determining if absolute value for power is delivered over the time interval and add the electric power usage to the absolute value for power received by the utility meter if the absolute value for power is delivered over the time interval; and
determine if the absolute value for power is received over the time interval and subtract electric power generated from the absolute value for power received by the utility meter if the absolute value for power is received over the time interval.

10. The tangible machine readable medium of claim 9, wherein the utility meter comprises a smart power meter comprising the tangible machine readable medium configured to store the power detection and correction instructions.

11. The tangible machine readable medium of claim 9 or claim 10, wherein:
the power detection and correction instructions comprise instructions to calculate the power via summing one or more products of the measured electrical voltage and the measured electrical current over a time interval, and/or
the power detection and correction instructions comprise instructions to calculate the power via calculating the absolute value of the power, wherein, preferably, the instructions to calculate the absolute value of the power comprise instructions to adjust a most significant bit (MSB) of the calculated power to reflect a positive value.

## Patentansprüche

1. System (30), umfassend:
einen Verbrauchszähler, umfassend
einen ersten Sensor (60), der konfiguriert ist, um einen Verbrauch, eine Erzeugung oder eine Kombination davon von elektrischer Leistung (82) zu erfassen; und
ein Leistungserfassungs- und -korrektursystem (44), das konfiguriert ist, um eine Ungenauigkeit mit einer Messung einer elektrischen Spannung, eines elektrischen Stroms oder einer Kombination davon von dem ersten Sensor (60) zu erfassen und zu korrigieren, wobei das Leistungserfassungs- und -korrektursystem (44) einen Prozessor (46) umfasst, der konfiguriert ist, um ein Programm, das in einem Speicher (48) des Verbrauchszählers gespeichert ist, auszuführen;
wobei der Prozessor (46) konfiguriert ist, die folgenden Schritte auszuführen:
Summieren des Absolutwerts für Leistung für ein erstes Intervall;
Bestimmen, unter Verwendung des ersten Sensors (60), von zumindest einem von einer Anzeige eines durch einen Endnutzer verbrauchten elektrischen Leistungsverbrauchs und einer Anzeige einer durch einen Endnutzer erzeugten elektrischen Leistung;
wobei der Prozessor (46) weiter konfiguriert ist, einen oder mehrere der Schritte auszuführen:
Bestimmen, ob ein Absolutwert für Leistung über ein Zeitintervall geliefert wurde, und Addieren des elektrischen Leistungsverbrauchs zu dem durch den Verbrauchszähler empfangenen Absolutwert für Leistung, wenn der Absolutwert für Leistung über das Zeitintervall geliefert wurde; und
Bestimmen, ob der Absolutwert für Leistung über das Zeitintervall empfangen wurde, und Subtrahieren der erzeugten elektrischen Leistung von dem durch den Verbrauchszähler empfangenen Absolutwert für Leistung, wenn der Absolutwert für Leistung über das Zeitintervall empfangen wurde.

2. System nach Anspruch 1, wobei die Ungenauigkeit zumindest eines umfasst, von:
einer Messung einer Gleichspannungsversatzkomponente des elektrischen Stroms, und
einer Berechnung eines negativen elektrischen Leistungswerts.

3. System nach Anspruch 1 oder Anspruch 2, wobei der erste Sensor (60) einen Stromtransformator umfasst.

4. System nach einem vorstehenden Anspruch, wobei das Leistungserfassungs- und -korrektursystem eine elektronische Leiterplatte (44) umfasst, die den Prozessor (46) und den Speicher (48) umfasst, wobei der Speicher (48) konfiguriert ist, um mit Anweisungen blitzaktualisiert zu werden, um die Ungenauigkeit zu erfassen und zu korrigieren.

5. System nach einem vorstehenden Anspruch, wobei das Leistungserfassungs- und -korrektursystem (44) konfiguriert ist, um den Verbrauch, die Erzeugung oder die Kombination davon von der elektrischen Leistung über ein Zeitintervall unter Verwendung einer Messung der elektrischen Spannung und des elektrischen Stroms zu akkumulieren, wobei vorzugsweise das Leistungserfassungs- und -korrektursystem (44) konfiguriert ist, um den Absolutwert der Akkumulation der elektrischen Leistung zu berechnen.

6. System nach einem vorstehenden Anspruch, umfassend einen zweiten Sensor, der konfiguriert ist, um den Verbrauch, die Erzeugung oder die Kombination davon von der elektrischen Leistung zu erfassen, wobei der erste Sensor (60) konfiguriert ist, um einen ersten elektrischen Strom in einer ersten Phase zu erfassen, und der zweite Sensor konfiguriert ist, um einen zweiten elektrischen Strom in einer zweiten Phase, die von der ersten Phase verschieden ist, zu erfassen, und wobei das Leistungserfassungs- und -korrektursystem (44) konfiguriert ist, um eine Ungenauigkeit mit einer Messung des ersten elektrischen Stroms in der ersten Phase und einer Messung des zweiten elektrischen Stroms in der zweiten Phase zu erfassen und zu korrigieren.

7. System nach einem vorstehenden Anspruch, wobei der Verbrauchszähler ein intelligenter Zähler einer erweiterten Zählerinfrastruktur (AMI) ist.

8. Verfahren, umfassend:
Erfassen einer Ungenauigkeit in Bezug auf eine Messung einer elektrischen Spannung, eines elektrischen Stroms oder einer Kombination davon, die durch einen Sensor (60) eines Verbrauchszählers erzeugt wird,
wobei der Sensor konfiguriert ist, um eine Anzeige eines durch einen Endnutzer verbrauchten elektrischen Leistungsverbrauchs, einer durch einen Endnutzer erzeugten elektrischen Leistungserzeugung oder einer Kombination davon bereitzustellen;
Korrigieren der Ungenauigkeit durch ein Erzeugen eines elektrischen Leistungsverbrauchs- oder eines elektrischen Leistungserzeugungswerts;
wobei das Verfahren die Schritte umfasst:
Summieren eines Absolutwerts für Leistung für ein erstes Intervall;
Bestimmen, unter Verwendung eines ersten Sensors (60), von zumindest einem von einer Anzeige des durch einen Endnutzer verbrauchten elektrischen Leistungsverbrauchs und einer Anzeige einer durch einen Endnutzer erzeugten elektrischen Leistung;
Bestimmen, ob ein Absolutwert für Leistung über das Zeitintervall geliefert wurde, und Addieren des elektrischen Leistungsverbrauchs zu dem durch den Verbrauchszähler empfangenen Absolutwert für Leistung, wenn der Absolutwert für Leistung über das Zeitintervall geliefert wurde; und
Bestimmen, ob der Absolutwert für Leistung über das Zeitintervall empfangen wurde, und Subtrahieren der erzeugten elektrischen Leistung von dem durch den Verbrauchszähler empfangenen Absolutwert für Leistung, wenn der Absolutwert für Leistung über das Zeitintervall empfangen wurde.

9. Greifbares maschinenlesbares Medium, das Leistungserfassungs- und - korrekturanweisungen umfasst, die konfiguriert sind zum:
Messen einer elektrischen Spannung;
Messen eines elektrischen Stroms;
Berechnen einer Leistung unter Verwendung der gemessenen elektrischen Spannung und des gemessenen elektrischen Stroms über ein Zeitintervall;
Summieren eines Absolutwerts für Leistung für ein erstes Intervall der berechneten Leistung;
Bestimmen, unter Verwendung eines ersten Sensors (60), von zumindest einem von einer Anzeige des durch einen Endnutzer verbrauchten elektrischen Leistungsverbrauchs und einer Anzeige einer durch einen Endnutzer erzeugten elektrischen Leistung;
Bestimmen, ob ein Absolutwert für Leistung über das Zeitintervall geliefert wurde, und Addieren des elektrischen Leistungsverbrauchs zu dem durch den Verbrauchszähler empfangenen Absolutwert für Leistung, wenn der Absolutwert für Leistung über das Zeitintervall geliefert wurde; und
Bestimmen, ob der Absolutwert für Leistung über das Zeitintervall empfangen wurde, und Subtrahieren der erzeugten elektrischen Leistung von dem durch den Verbrauchszähler empfangenen Absolutwert für Leistung, wenn der Absolutwert für Leistung über das Zeitintervall empfangen wurde.

10. Greifbares maschinenlesbares Medium nach Anspruch 9, wobei der Verbrauchszähler einen intelligenten Leistungszähler umfasst, der das greifbare maschinenlesbare Medium umfasst, das konfiguriert ist, die Leistungserfassungs- und - korrekturanweisungen zu speichern.

11. Greifbares maschinenlesbares Medium nach Anspruch 9 oder Anspruch 10, wobei:
die Leistungserfassungs- und -korrekturanweisungen Anweisungen umfassen, um die Leistung über ein Summieren von einem oder mehreren Produkten der gemessenen elektrischen Spannung und des gemessenen elektrischen Stroms über ein Zeitintervall zu berechnen, und/oder
die Leistungserfassungs- und -korrekturanweisungen Anweisungen umfassen, um die Leistung über ein Berechnen des Absolutwerts der Leistung zu berechnen, wobei vorzugsweise die Anweisungen, um den Absolutwert der Leistung zu berechnen, Anweisungen umfassen, um ein wichtigstes Bit (MSB) der berechneten Leistung anzupassen, um einen positiven Wert zu reflektieren.

## Revendications

1. Système (30) comprenant :
un compteur de service, comprenant
un premier capteur (60) configuré pour détecter une utilisation, une génération, ou une combinaison de ceux-ci de puissance électrique (82) ; et
un système de détection et de correction de puissance (44) configuré pour détecter et corriger une inexactitude avec une mesure d'une tension électrique, d'un courant électrique, ou une combinaison de ceux-ci provenant du premier capteur (60), dans lequel le système de détection et de correction de puissance (44) comprend un processeur (46) configuré pour exécuter un programme stocké dans une mémoire (48) du compteur de service ;
dans lequel le processeur (46) est configuré pour exécuter les étapes suivantes :
la sommation de la valeur absolue pour une puissance pendant un premier intervalle ;
la détermination de l'utilisation du premier capteur (60) d'au moins l'une parmi une indication d'une utilisation de puissance électrique utilisée par un utilisateur final et une indication d'une puissance électrique générée par un utilisateur final ;
le processeur (46) étant configuré en outre pour effectuer une ou plusieurs des étapes suivantes :
le fait de déterminer si la valeur absolue pour une puissance est délivrée pendant l'intervalle de temps et d'ajouter l'utilisation de puissance électrique à la valeur absolue pour une puissance reçue par le compteur de service si la valeur absolue pour une puissance est délivrée pendant l'intervalle de temps ; et
le fait de déterminer si la valeur absolue pour une puissance est reçue pendant l'intervalle de temps et de soustraire une puissance électrique générée de la valeur absolue pour une puissance reçue par le compteur de service si la valeur absolue pour une puissance est reçue pendant l'intervalle de temps.

2. Système selon la revendication 1, dans lequel l'inexactitude comprend au moins l'un parmi :
une mesure d'une composante de décalage CC du courant électrique, et
un calcul d'une valeur de puissance électrique négative.

3. Système selon la revendication 1 ou la revendication 2, dans lequel le premier capteur (60) comprend un transformateur de courant.

4. Système selon l'une quelconque des revendications précédentes, dans lequel le système de détection et de correction de puissance comprend une carte électronique (44) comprenant le processeur (46) et la mémoire (48), dans lequel la mémoire (48) est configurée pour être soumise à une mise à niveau éclair avec des instructions pour détecter et corriger l'inexactitude.

5. Système selon l'une quelconque des revendications précédentes, dans lequel le système de détection et de correction de puissance (44) est configuré pour accumuler l'utilisation, la génération, ou la combinaison de ceux-ci de la puissance électrique pendant un intervalle de temps en utilisant une mesure de la tension électrique et du courant électrique, dans lequel, de préférence, le système de détection et de correction de puissance (44) est configuré pour calculer la valeur absolue de l'accumulation de la puissance électrique.

6. Système selon l'une quelconque des revendications précédentes, comprenant un second capteur configuré pour détecter l'utilisation, la génération, ou la combinaison de ceux-ci de la puissance électrique, dans lequel le premier capteur (60) est configuré pour détecter un premier courant électrique dans une première phase, et le second capteur est configuré pour détecter un second courant électrique dans une seconde phase différente de la première phase, et dans lequel le système de détection et de correction de puissance (44) est configuré pour détecter et corriger une inexactitude avec une mesure du premier courant électrique dans la première phase et une mesure du second courant électrique dans la seconde phase.

7. Système selon l'une quelconque des revendications précédentes, dans lequel le compteur de service comprend un compteur intelligent à infrastructure de compteur avancé (AMI).

8. Procédé comprenant :
la détection d'une inexactitude relative à une mesure d'une tension électrique, d'un courant électrique, ou d'une combinaison de ceux-ci, générée par un capteur (60) d'un compteur de service,
dans lequel le capteur est configuré pour fournir une indication d'une utilisation de puissance électrique utilisée par un utilisateur final, d'une génération de puissance électrique générée par un utilisateur final, ou d'une combinaison de ceux-ci ;
la correction de l'inexactitude par la génération d'une valeur d'utilisation de puissance électrique ou de génération de puissance électrique ;
le procédé comprenant les étapes suivantes :
la sommation d'une valeur absolue pour une puissance pendant un premier intervalle ;
la détermination de l'utilisation d'un premier capteur (60) d'au moins l'une parmi une indication de l'utilisation de puissance électrique utilisée par un utilisateur final et une indication d'une puissance électrique générée par un utilisateur final ;
le fait de déterminer si la valeur absolue pour une puissance est délivrée pendant l'intervalle de temps et d'ajouter l'utilisation de puissance électrique à la valeur absolue pour une puissance reçue par le compteur de service si la valeur absolue pour une puissance est délivrée pendant l'intervalle de temps ; et
le fait de déterminer si la valeur absolue pour une puissance est reçue pendant l'intervalle de temps et de soustraire une puissance électrique générée de la valeur absolue pour une puissance reçue par le compteur de service si la valeur absolue pour une puissance est reçue pendant l'intervalle de temps.

9. Support tangible lisible par une machine comprenant des instructions de détection et de correction de puissance configurées pour :
mesurer une tension électrique ;
mesurer un courant électrique ;
calculer une puissance en utilisant la tension électrique mesurée et le courant électrique mesuré pendant un intervalle de temps ;
sommer une valeur absolue pour une puissance pendant un premier intervalle provenant de la puissance calculée ;
déterminer l'utilisation d'un premier capteur (60) d'au moins l'une parmi une indication de l'utilisation de puissance électrique utilisée par un utilisateur final et une indication d'une puissance électrique générée par un utilisateur final ;
déterminer si la valeur absolue pour une puissance est délivrée pendant l'intervalle de temps et ajouter l'utilisation de puissance électrique à la valeur absolue pour une puissance reçue par le compteur de service si la valeur absolue pour une puissance est délivrée pendant l'intervalle de temps ; et
déterminer si la valeur absolue pour une puissance est reçue pendant l'intervalle de temps et soustraire une puissance électrique générée de la valeur absolue pour une puissance reçue par le compteur de service si la valeur absolue pour une puissance est reçue pendant l'intervalle de temps.

10. Support tangible lisible par une machine selon la revendication 9, dans lequel le compteur de service comprend un compteur de puissance intelligent comprenant le support tangible lisible par une machine configuré pour stocker les instructions de détection et de correction de puissance.

11. Support tangible lisible par une machine selon la revendication 9 ou la revendication 10, dans lequel :
les instructions de détection et de correction de puissance comprennent des instructions pour calculer la puissance via la sommation d'un ou de plusieurs produits de la tension électrique mesurée et du courant électrique mesuré pendant un intervalle de temps, et/ou
les instructions de détection et de correction de puissance comprennent des instructions pour calculer la puissance via le calcul de la valeur absolue de la puissance, dans lequel, de préférence, les instructions pour calculer la valeur absolue de la puissance comprennent des instructions pour ajuster un bit le plus significatif (MSB) de la puissance calculée pour refléter une valeur positive.
